(19) Europäisches Patentamt
European Patent Office
Office européen des brevets

(11) **EP 2 093 895 A1**

(12) **EUROPEAN PATENT APPLICATION**

(43) Date of publication:
**26.08.2009 Bulletin 2009/35**

(51) Int Cl.:
***H04B 1/707*** *(2006.01)*

(21) Application number: **09161683.9**

(22) Date of filing: **15.08.2003**

(84) Designated Contracting States:
**AT BE BG CH CY CZ DE DK EE ES FI FR GB GR HU IE IT LI LU MC NL PT RO SE SI SK TR**

(30) Priority: **20.08.2002 US 404561 P**

(62) Document number(s) of the earlier application(s) in accordance with Art. 76 EPC:
**03793067.4 / 1 552 405**

(71) Applicant: **INTERDIGITAL TECHNOLOGY CORPORATION**
**Wilmington, DE 19801 (US)**

(72) Inventors:
• **Kwak, Jaeyoung**
  **Palisades Park, NJ 07650 (US)**

• **Haim, John, W.**
  **Baldwin, NY 11510 (US)**
• **Zeira, Ariela**
  **Huntington, NY 11743 (US)**
• **Pan, Jung-Lin**
  **Selden, NY 11784 (US)**

(74) Representative: **Engdahl, Stefan**
**AWAPATENT AB**
**P.O. Box 45086**
**104 30 Stockholm (SE)**

Remarks:
This application was filed on 02-06-2009 as a divisional application to the application mentioned under INID code 62.

(54) **Fast joint detection**

(57) *K* data signals, or bursts, are transmitted over a shared spectrum in a code division multiple access communication format. A combined signal is received and sampled over the shared spectrum, as a plurality of received vector versions. The combined signal includes the *K* transmitted data signals. A plurality of system matrices and an associated covariance matrix using codes and estimated impulse responses of the *K* data signals is produced. Each system matrix corresponds to a received vector version. The system and covariance matrices are extended and approximated as block circulant matrices. A diagonal matrix of each of the extended and approximated system and covariance matrices are determined by prime factor algorithm - fast Fourier transform (PFA-FFT) without division of the matrix. The received vector versions are extended. A product of the diagonal matrices and the extended received vector versions is taken. An inverse block discrete Fourier transform is performed by a PFA-FFT on a result of the product to produce the estimated data of the *K* data signals.

FIG. 6

**Description**

BACKGROUND

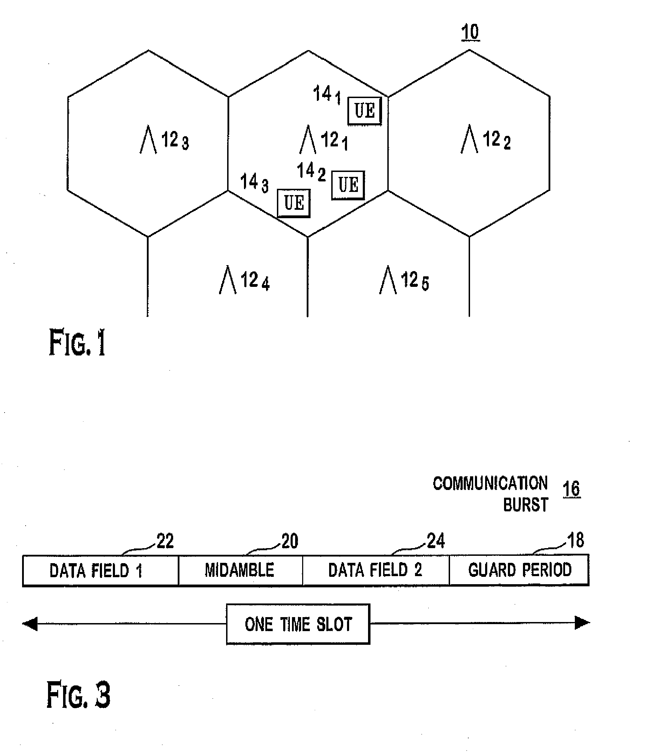

Figure 1 is an illustration of a wireless communication system 10. The communication system 10 has base stations $12_1$ to $12_5$ (12) which communicate with user equipments (UEs) $14_1$ to $14_3$ (14). Each base station 12 has an associated operational area, where it communicates with UEs 14 in its operational area.

In some communication systems, such as frequency division duplex using code division multiple access (FDD/CDMA) and time division duplex using code division multiple access (TDD/CDMA), multiple communications are sent over the same frequency spectrum. These communications are differentiated by their channelization codes. To more efficiently use the frequency spectrum, TDD/CDMA communication systems use repeating frames divided into timeslots for communication. A communication sent in such a system will have one or multiple associated codes and timeslots assigned to it.

Since multiple communications may be sent in the same frequency spectrum and at the same time, a receiver in such a system must distinguish between the multiple communications. One approach to detecting such signals is multiuser detection (MUD). In MUD, signals associated with all the UEs 14, are detected simultaneously. For TDD/CDMA systems, one of the popular MUD techniques is a joint detection technique using block linear equalizer (BLE-JD). Techniques for implementing BLE-JD include using a Cholesky or an approximate Cholesky decomposition. These approaches have high complexity. The high complexity leads to increased power consumption, which at the UE 14 results in reduced battery life.

Accordingly, it is desirable to have computationally efficient approaches to detecting received data.

SUMMARY

K data signals, or bursts, are transmitted over a shared spectrum in a code division multiple access communication format. A combined signal is received and sampled over the shared spectrum, as a plurality of received vector versions. The combined signal includes the $K$ transmitted data signals. A plurality of system matrices and an associated covariance matrix using codes and estimated impulse responses of the $K$ data signals is produced. Each system matrix corresponds to a received vector version. The system and covariance matrices are extended and approximated as block circulant matrices. A diagonal matrix of each of the extended and approximated system and covariance matrices are determined by prime factor algorithm - fast Fourier transform (PFA-FFT) without division of the matrices. The received vector versions are extended. A product of the diagonal matrices and the extended received vector versions is taken. An inverse block discrete Fourier transform is performed by a PFA-FFT on a result of the product to produce the estimated data of the $K$ data signals.

BRIEF DESCRIPTION OF THE DRAWING(S)

Figure 1 is a wireless communication system.

Figure 2 is a simplified transmitter and an efficient joint detection receiver.

Figure 3 is an illustration of a communication burst.

Figures 4a and 4b are a flow chart of a preferred embodiment for efficient joint detection.

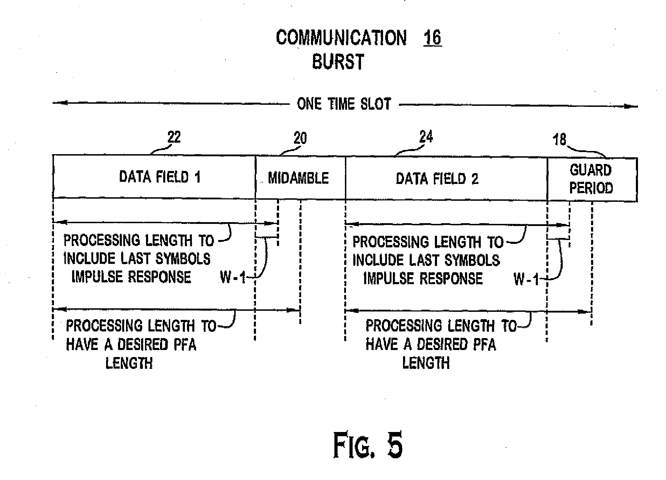

Figure 5 is an illustration of a data burst indicating extended processing areas.

Figure 6 is a block diagram of a preferred implementation of efficient joint detection.

Figure 7 is a simplified receiver having multiple antennas.

Figure 8 is a simplified receiver sampling the received signal using fractional sampling.

Figure 9 is a simplified receiver having multiple antennas and using fractional sampling.

Figure 10 is a block diagram of a preferred implementation of efficient joint detection for fractional sampling or receive diversity.

DETAILED DESCRIPTION OF THE PREFERRED EMBODIMENT(S)

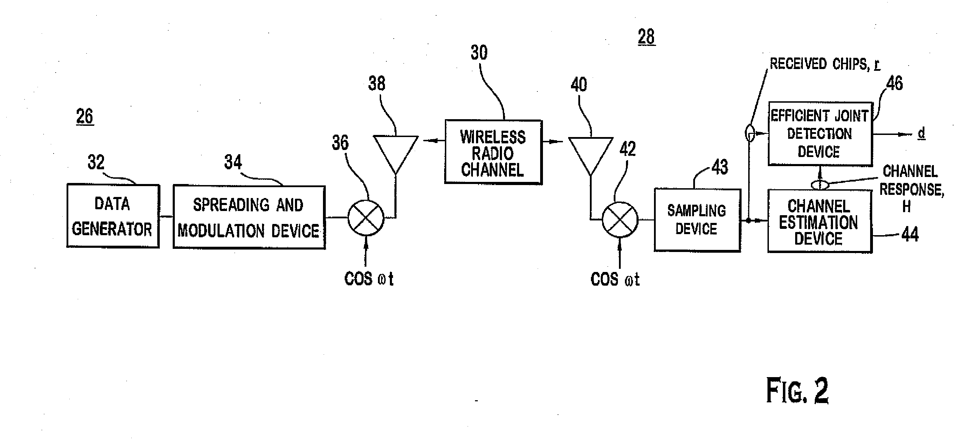

Figure 2 illustrates a simplified transmitter 26 and receiver 28 using efficient joint detection in a TDD/CDMA communication system, although efficient joint detection is applicable to other systems, such as FDD/CDMA. In a typical system, a transmitter 26 is in each UE 14 and multiple transmitting circuits 26 sending multiple communications are in each base station 12. The joint detection receiver 28 may be at a base station 12, UEs 14 or both.

The transmitter 26 sends data over a wireless radio channel 30. A data generator 32 in the transmitter 26 generates data to be communicated to the receiver 28. A modulation/spreading/training sequence insertion device 34 spreads the data with the appropriate code(s) and makes the spread reference data time-multiplexed with a midamble training sequence in the appropriate assigned time slot, producing a communication burst or bursts.

A typical communication burst 16 has a midamble 20, a guard period 18 and two data fields 22, 24, as shown in Figure 3. The midamble 20 separates the two data fields 22, 24 and the guard period 18 separates the communication bursts to allow for the difference in arrival times of bursts transmitted from different transmitters 26. The two data fields 22, 24 contain the communication burst's data.

The communication burst(s) are modulated by a modulator 36 to radio frequency (RF). An antenna 38 radiates the RF signal through the wireless radio channel 30 to an antenna 40 of the receiver 28. The type of modulation used for the transmitted communication can be any of those known to those skilled in the art, such as quadrature phase shift keying (QPSK) or M-ary quadrature amplitude modulation (QAM).

The antenna 40 of the receiver 28 receives various radio frequency signals. The received signals are demodulated by a demodulator 42 to produce a baseband signal. The baseband signal is sampled by a sampling device 43, such as one or multiple analog to digital converters, at the chip rate of the transmitted bursts. The samples are processed, such as by a channel estimation device 44 and an efficient joint detection device 46, in the time slot and with the appropriate codes assigned to the received bursts. The channel estimation device 44 uses the midamble training sequence component in the baseband samples to provide channel information, such as channel impulse responses. The channel information is used by the efficient joint detection device 46 to estimate the transmitted data of the received communication bursts as soft symbols.

The efficient joint detection device 46 uses the channel information provided by the channel estimation device 44 and the known spreading codes used by the transmitter 26 to estimate the data of the desired received communication burst(s).

Although efficient joint detection is explained using the third generation partnership project (3GPP) universal terrestrial radio access (UTRA) TDD system as the underlying communication system, it is applicable to other systems. That system is a direct sequence wideband CDMA (W-CDMA) system, where the uplink and downlink transmissions are confined to mutually exclusive timeslots.

The receiver 28 receives a total of $K$ bursts that arrive simultaneously, within one observation interval. For the 3GPP UTRA TDD system, each data field of a time slot corresponds to one observation interval. For a frequency division duplex (FDD) CDMA system, the received signals are continuous, i.e., not in bursts. To handle the continuous signals, FDD systems divide the received signals into time segments prior to applying efficient joint detection.

A code used for a $k^{th}$ burst is represented as $\underline{c}^{(k)}$. The $K$ bursts may originate from $K$ different transmitters or for multi-code transmissions, less than $K$ different transmitters.

Each data field of a communication burst has a predetermined number of transmitted symbols, $Ns$. Each symbol is transmitted using a predetermined number of chips, which is the spreading factor, $Q$. Accordingly, each data field has $Ns \times Q$ chips. After passing through the wireless radio channel, which can introduce a delay spread of up to $W-1$ chips, the observation interval at the receiver is of length $Q \times Ns + W - 1$ chips.

The symbol response vector $\underline{b}^{(k)}$ as the convolution of the channel response vector $\underline{h}^{(k)}$ with the corresponding spreading code $\underline{c}^{(k)}$ is per Equation 1.

$$\underline{b}^{(k)} = \underline{h}^{(k)} \circ \underline{c}^{(k)}$$

<div align="right">Equation 1</div>

$\circ$ denotes the convolutional operator. The length of $\underline{b}^{(k)}$ is $SF + W - 1$.

Using the symbol response vectors, the system matrix **A** is defined as per Equation 2.

<div align="center">Equation 2</div>

The size of the matrix is $(N_s \cdot SF + W - 1) \times N_s \cdot K$. **A** is a block Topleitz matrix.

Block **B** is defined as per Equation 3.

$$\mathbf{B} = \begin{bmatrix} \underline{\mathbf{b}}^{(1)} & \underline{\mathbf{b}}^{(2)} & \cdots & \underline{\mathbf{b}}^{(K)} \end{bmatrix}$$

Equation 3

The received vector sampled at the chip rate can be represented by Equation 4.

$$\underline{\mathbf{r}} = \mathbf{A}\,\underline{\mathbf{d}} + \underline{\mathbf{n}}$$

Equation 4

The size of vector $\underline{r}$ is ($N_s \cdot SF + W - 1$) by 1. This size corresponds to the observation interval.
Data vector $\underline{\mathbf{d}}$ of size $N_s \cdot K$ by 1 has the form of Equation 5.

$$\underline{\mathbf{d}} = \begin{bmatrix} \underline{\mathbf{d}}_1^T & \underline{\mathbf{d}}_2^T & \cdots & \underline{\mathbf{d}}_{N_s}^T \end{bmatrix}^T$$

Equation 5

The sub-vector $\underline{\mathbf{d}}_n$ of size $K$ by 1 is composed of the $n^{th}$ symbol of each user and is defined as Equation 6.

$$\underline{\mathbf{d}}_n = \begin{bmatrix} \underline{\mathbf{d}}_n^{(1)} & \underline{\mathbf{d}}_n^{(2)} & \cdots & \underline{\mathbf{d}}_n^{(K)} \end{bmatrix}^T, \quad n = 1, \ldots, N_s$$

Equation 6

The vector $\underline{\mathbf{n}}$ of size ($N_s \cdot SF + W - 1$) by 1 is the background noise vector and is assumed to be white.
Determining $\underline{\mathbf{d}}$ using an MMSE solution is per Equation 7.

$$\underline{\mathbf{d}} = \mathbf{R}^{-1}\left(\mathbf{A}^H \underline{\mathbf{r}}\right)$$

Equation 7

$(\cdot)^H$ represents the hermetian function (complex conjugate transpose). The covariance matrix of the system matrix **R** for a preferred MMSE solution is per Equation 8.

$$\mathbf{R} = \mathbf{A}^H \mathbf{A} + \sigma^2 \mathbf{I}$$

Equation 8

$\sigma^2$ is the noise variance, typically obtained from the channel estimation device 44, and **I** is the identity matrix.

Using block circulant approximation and block DFT using PFA-FFTs, $\underline{d}$ in Equation 7 can be determined per Equation 9.

$$\underline{d} = F(\mathbf{R}^{-1})F(\mathbf{A}^{H}\underline{r})$$
$$= F^{-1}(\mathbf{\Lambda}^{-1}\mathbf{\Lambda}_{\mathbf{A}}F(\underline{r}_c))$$

<div align="right">Equation 9</div>

$F(\cdot)$ and $F^{-1}(\cdot)$ indicate the block-DFT function and the inverse block-DFT, respectively. The derivation of the block diagonal matrices $\Lambda$ and $\Lambda_{\mathbf{A}}$ is described subsequently. Instead of directly solving Equation 9, Equation 9 can be solved using the LU decomposition and the forward and backward substitution of the main diagonal block of $\Lambda$. Alternately, Equation 9 can be solved using Cholesky decomposition.

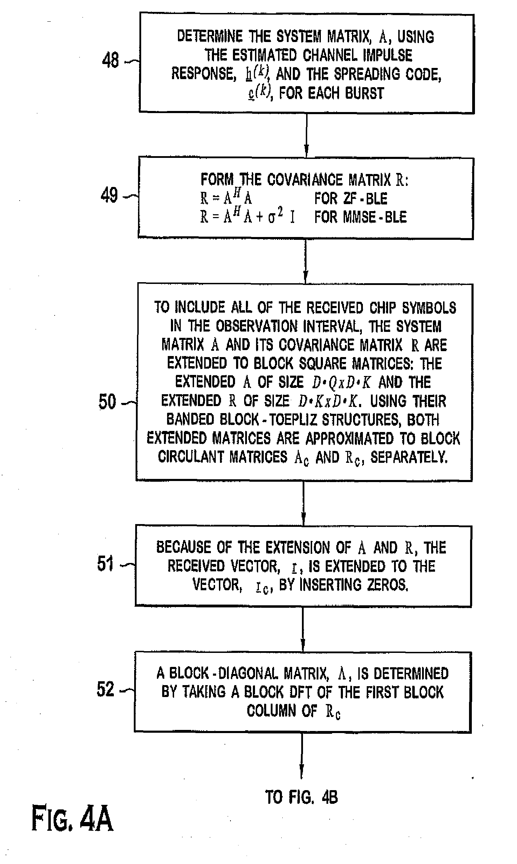

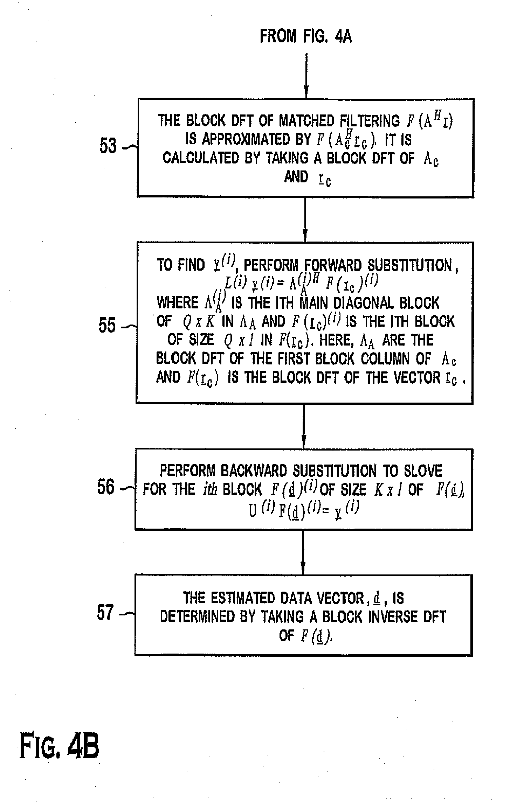

Figure 4 is a flowchart for a preferred method of determining the data vector $\underline{d}$ using fast joint detection. The system matrix $\mathbf{A}$ is determined using the estimated channel response vector $\underline{h}^{(k)}$ and the spreading code $\underline{c}^{(k)}$ for each burst, 48. $\mathbf{R}$, the covariance matrix of the system matrix, is formed, 49. The system matrix $\mathbf{A}$ and its covariance matrix $\mathbf{R}$ are extended block square matrices. The extended $\mathbf{A}$ is of size $D \cdot Q$ by $D \cdot K$ and the extended $\mathbf{R}$ is of size $D \cdot K$ by $D \cdot K$, respectively. $D$ is chosen as per Equation 10.

$$D \geq \left\lceil N_s + \frac{W-1}{Q} \right\rceil$$

<div align="right">Equation 10</div>

Both extended matrices are approximated to block circulant matrices, $\mathbf{A}c$ and $\mathbf{R}_c$, 50. Because of the extension of $\mathbf{A}$ and $\mathbf{R}$, the received vector, $\underline{r}$, is extended to the vector $\underline{r}_c$ of size $D \cdot SF$ x 1 by inserting zeros, 51. The block-diagonal matrix, $\Lambda$, is determined by taking a block DFT using PFA-FFT of the first block column of $\mathbf{R}_c$, 52.

The block DFT of matched filtering Error! Objects cannot be created from editing field codes. is approximated by Error! Objects cannot be created from editing field codes.. It is calculated by taking a block DFT using PFA-FFT of $\mathbf{A}c$ and $\underline{r}c$, 53. Due to the block-diagonal structure of $\Lambda$ and $\Lambda_{\mathbf{A}}$, the blocks $F(\underline{d})^{(i)}$, $i = 1, ..., D$, are of size $K$ by 1 in $F(\underline{d})$. They are determined by performing on the main diagonal blocks, Error! Objects cannot be created from editing field codes.of Error! Objects cannot be created from editing field codes., LU decomposition, Error! Objects cannot be created from editing field codes., forward substitution, $\mathbf{L}^{(i)}\underline{y}^{(i)} = \mathbf{\Lambda}_{\mathbf{A}}^{(i)^{H}}F(\underline{r}_c)^{(i)}$, 55, and backward substitution, Error! Objects cannot be created from editing field codes., 56. Error! Objects cannot be created from editing field codes. is a lower triangular matrix. Error! Objects cannot be created from editing field codes. is a an upper triangular matrix. $\mathbf{\Lambda}_{\mathbf{A}}^{(i)}$ is the $i^{th}$ main diagonal block of size $SF$ by $K$ in $\Lambda_{\mathbf{A}}$ and $F(\underline{r}_c)^{(i)}$ is the $i^{th}$ block of size $Q$ x 1 in $F(\underline{r}_c)$. $\Lambda_{\mathbf{A}}$ is the block DFT using PFA-FFT of the first column of $\mathbf{A}c$ and $F(\underline{r}_c)$ is the block DFT using PFA-FFT of the vector, $\underline{r}_c$. The estimated data vector, $\underline{d}$, is determined by a inverse block-DFT of $F(\underline{d})$, 57.

Although Equation 9 is a MMSE based solution, fast joint detection can be applied to other approaches, such as a zero forcing approach as per Equation 11.

$$\mathbf{R}\underline{d} = (\mathbf{A}^{H}\mathbf{A})\underline{d} = \mathbf{A}^{H}\underline{r}$$

<div align="right">Equation 11</div>

As shown in Equation 11, in the zero forcing solution, the $\sigma^2\mathbf{I}$ term is deleted from Equation 8. The following is a derivation for the MMSE solution, although an analogous derivation can be used for a zero forcing solution.

To reduce the complexity in determining $F(\mathbf{A}^{H}\underline{r})$, a block DFT using PFA-FFT approach taking advantage of the block-Toeplitz structure of $\mathbf{A}$ may be used as shown in Equation 2. First, by repeating $\mathbf{B}$, we extend $\mathbf{A}$ to a block-square matrix of size $D \cdot Q \times D \cdot K$, to use all of the chip symbols in the observation interval. The extended **A** is composed of $D^2$ blocks of size Q x K. The extended **A** is approximated to the block-circulant matrix **A**$c$.

**A**$c$ can be decomposed into three matrices per Equation 12.

$$\mathbf{A}_c = \mathbf{F}_{(Q)}^H \mathbf{\Lambda}_\mathbf{A} \mathbf{F}_{(K)}$$

Equation 12

$\mathbf{F}_{(n)} = \mathbf{F} \otimes \mathbf{I}_n$ is a block DFT using PFA-FFT matrix of size $D \cdot n$ by $D \cdot n$. $\otimes$ denotes a kronecker product. **I**$n$ is an identity matrix of size $n$ x $n$ and **F** is a DFT matrix of size $D$ x $D$, whose elements $f_{il}$, $i$ and $l$ = 1, 2, ..., $D$ are per Equation 13.

$$f_{il} = \frac{1}{\sqrt{D}} \exp\left(-j\frac{2\pi i l}{D}\right)$$

Equation 13

$D$ is the length of the DFT and $\mathbf{F}^H \mathbf{F} = \mathbf{I}$. **I** is an identity matrix of size $D$ x $D$.

The block diagonal matrix $\Lambda_\mathbf{A}$ is of size $D \cdot Q \times D \cdot K$ and has the form per Equation 14.

$$\mathbf{\Lambda}_\mathbf{A} = \begin{bmatrix} \mathbf{\Lambda}_\mathbf{A}^{(1)} & \mathbf{0} & \cdots & \mathbf{0} \\ \mathbf{0} & \mathbf{\Lambda}_\mathbf{A}^{(2)} & \cdots & \mathbf{0} \\ \vdots & \vdots & \ddots & \vdots \\ \mathbf{0} & \mathbf{0} & \cdots & \mathbf{\Lambda}_\mathbf{A}^{(D)} \end{bmatrix}$$

Equation 14

Each of its entries $\mathbf{\Lambda}_\mathbf{A}^{(i)}$, $i$ = 1, 2, ..., $D$, is a $Q$ by $K$ block per Equation 15.

$$\mathbf{\Lambda}_\mathbf{A}^{(i)} = \begin{bmatrix} \lambda_{1,1}^{(A,i)} & \cdots & \cdots & \lambda_{1,K}^{(A,i)} \\ \vdots & \ddots & & \vdots \\ \vdots & & \ddots & \vdots \\ \lambda_{Q,1}^{(A,i)} & \cdots & \cdots & \lambda_{Q,K}^{(A,i)} \end{bmatrix}$$

Equation 15

Alternatively, the main diagonal blocks, $\mathbf{\Lambda}_\mathbf{A}^{(i)}$, $i$ = 1, 2, ..., $D$, can be computed by, per Equation 16.

$$\begin{bmatrix} \mathbf{\Lambda}_A^{(1)^T} & \mathbf{\Lambda}_A^{(2)^T} & \cdots & \mathbf{\Lambda}_A^{(D)^T} \end{bmatrix}^T = \left( \mathbf{F}_{(Q)} \, \mathbf{A}_c \left( : , 1{:}K \right) \right)$$

<div align="right">Equation 16</div>

$\mathbf{A}_c(:, 1{:}K)$ denotes the first block column of $\mathbf{A}_c$. Namely, the first K columns of $\mathbf{A}_c$. $\mathbf{F}_{(SF)} \, \mathbf{A}_c(:, 1{:}K)$ can be calculated by $Q{\cdot}K$ parallel non-block DFTs of length $D$, using PFA-FFTs.

Due to the extention of **A**, the received vector $\underline{\mathbf{r}}$ is also extended by inserting zeros, becoming vector $\underline{\mathbf{r}}_c$ of size $D{\cdot}Q$ by 1.

Using the above, $F(\mathbf{A}^H \underline{\mathbf{r}})$ is approximated to $F\left( \mathbf{A}_c^H \underline{\mathbf{r}}_c \right)$. It can be written as Equation 17.

$$F\left( \mathbf{A}_c^H \underline{\mathbf{r}}_c \right) = \mathbf{F}_{(K)}^H \, \mathbf{\Lambda}_{\mathbf{A}}^H \, \mathbf{F}_{(Q)} \underline{\mathbf{r}}_c$$

<div align="right">Equation 17</div>

The covariance matrix **R** of size $N_s \cdot K \times N_s \cdot K$ has the block-square matrix form shown in Equation 18.

$$\mathbf{R} = \begin{bmatrix} \mathbf{R}_0 & \mathbf{R}_1^H & \cdots & \mathbf{R}_L^H & \cdots & \cdots & \cdots & \cdots & \mathbf{0} & \cdots & \mathbf{0} & \mathbf{0} \\ \mathbf{R}_1 & \mathbf{R}_0 & \ddots & \ddots & \ddots & \ddots & \ddots & \ddots & \ddots & \ddots & \vdots & \vdots \\ \vdots & \mathbf{R}_1 & \ddots & \ddots & \ddots & \ddots & \ddots & \ddots & \ddots & \ddots & \vdots & \vdots \\ \vdots & \vdots & \ddots & \ddots & \ddots & \ddots & \ddots & \ddots & \ddots & \ddots & \vdots & \vdots \\ \mathbf{R}_L & \vdots & \ddots & \ddots & \ddots & \ddots & \ddots & \ddots & \ddots & \ddots & \vdots & \vdots \\ \mathbf{0} & \mathbf{R}_L & \ddots & \ddots & \ddots & \ddots & \ddots & \ddots & \ddots & \ddots & \vdots & \vdots \\ \vdots & \mathbf{0} & \ddots & \mathbf{R}_L & \ddots & \ddots & \ddots & \ddots & \ddots & \ddots & \vdots & \vdots \\ \vdots & \vdots & \ddots & \ddots & \ddots & \ddots & \ddots & \ddots & \ddots & \ddots & \mathbf{0} & \vdots \\ \vdots & \vdots & \ddots & \ddots & \ddots & \ddots & \ddots & \ddots & \ddots & \mathbf{R}_L^H & \mathbf{0} \\ \vdots & \vdots & \ddots & \ddots & \ddots & \ddots & \ddots & \ddots & \ddots & \vdots & \mathbf{R}_L^H \\ \vdots & \vdots & \ddots & \ddots & \ddots & \ddots & \ddots & \ddots & \ddots & \vdots & \vdots \\ \mathbf{0} & \mathbf{0} & \cdots & \cdots & \cdots & \cdots & \cdots & \cdots & \mathbf{R}_L & \cdots & \mathbf{R}_1 & \mathbf{R}_0 \end{bmatrix}$$

Equation 18

$L$ is defined per Equation 19.

$$L = \left\lceil \frac{Q + W - 1}{Q} \right\rceil$$

Equation 19

Each entry, $\mathbf{R}_i$, in the $\mathbf{R}$ matrix is a $K$ by $K$ block and $\mathbf{0}$ is a $K$ by $K$ zero matrix. Due to the size of the extended $\mathbf{A}$, the matrix $\mathbf{R}$ is also extended to size $D \cdot K$ by $D \cdot K$ by inserting zeros.

The extended $\mathbf{R}$ is approximated to a block-circulant matrix, $\mathbf{R}c$, of size $D \cdot K$ by $D \cdot K$ per Equation 20.

$$\mathbf{R}_c = \begin{bmatrix} \mathbf{R}_0 & \mathbf{R}_1^H & \cdots & \mathbf{R}_L^H & \cdots & \cdots & \cdots & \cdots & \mathbf{0} & \cdots & \mathbf{R}_2 & \mathbf{R}_1 \\ \mathbf{R}_1 & \mathbf{R}_0 & \ddots & \ddots & \ddots & \ddots & \ddots & \ddots & \ddots & \ddots & \vdots & \vdots \\ \vdots & \mathbf{R}_1 & \ddots & \ddots & \ddots & \ddots & \ddots & \ddots & \ddots & \ddots & \mathbf{R}_L & \vdots \\ \vdots & \vdots & \ddots & \ddots & \ddots & \ddots & \ddots & \ddots & \ddots & \ddots & \vdots & \mathbf{R}_L \\ \mathbf{R}_L & \vdots & \ddots & \ddots & \ddots & \ddots & \ddots & \ddots & \ddots & \ddots & \vdots & \vdots \\ \mathbf{0} & \mathbf{R}_L & \ddots & \ddots & \ddots & \ddots & \ddots & \ddots & \ddots & \ddots & \vdots & \vdots \\ \vdots & \mathbf{0} & \ddots & \mathbf{R}_L & \ddots & \ddots & \ddots & \ddots & \ddots & \ddots & \vdots & \vdots \\ \vdots & \vdots & \ddots & \ddots & \ddots & \ddots & \ddots & \ddots & \ddots & \ddots & \mathbf{0} & \vdots \\ \mathbf{R}_L^H & \vdots & \ddots & \ddots & \ddots & \ddots & \ddots & \ddots & \ddots & \ddots & \mathbf{R}_L^H & \mathbf{0} \\ \vdots & \mathbf{R}_L^H & \ddots & \ddots & \ddots & \ddots & \ddots & \ddots & \ddots & \ddots & \vdots & \mathbf{R}_L^H \\ \vdots & \vdots & \ddots & \ddots & \ddots & \ddots & \ddots & \ddots & \ddots & \ddots & \vdots & \vdots \\ \mathbf{R}_1^H & \mathbf{R}_2^H & \cdots & \cdots & \cdots & \cdots & \cdots & \cdots & \mathbf{R}_L & \cdots & \mathbf{R}_1 & \mathbf{R}_0 \end{bmatrix}$$

Equation 20

The block circulant matrix $\mathbf{R}_c$, is decomposed into three matrices per Equation 21.

$$\mathbf{R}_c = \mathbf{F}_{(K)}^H \mathbf{\Lambda} \mathbf{F}_{(K)}$$

Equation 21

$\mathbf{F}_{(K)} = \mathbf{F} \otimes \mathbf{I}_K$ is a block DFT using PFA-FFT matrix of size $D \cdot K \times D \cdot K$. $\otimes$ denotes a Kronecker product. $\mathbf{I}_K$ is an identity matrix of size $K$ x $K$ and $\mathbf{F}$ is a DFT matrix of size $D$ x $D$ as described in Equation 13.

The block diagonal matrix $\mathbf{\Lambda}$ of size $D \cdot K$ by $D \cdot K$ has the form per Equation 22.

$$\mathbf{\Lambda} = \begin{bmatrix} \mathbf{\Lambda}^{(1)} & \mathbf{0} & \cdots & \mathbf{0} \\ \mathbf{0} & \mathbf{\Lambda}^{(2)} & \cdots & \mathbf{0} \\ \vdots & \vdots & \ddots & \vdots \\ \mathbf{0} & \mathbf{0} & \cdots & \mathbf{\Lambda}^{(D)} \end{bmatrix}$$

Equation 22

Each of its entries, $\mathbf{\Lambda}^{(i)}$, $i = 1, 2, ..., D$, is a $K$ by $K$ block, per Equation 23A.

$$\mathbf{\Lambda}^{(i)} = \begin{bmatrix} \lambda_{1,1}^{(i)} & \cdots & \cdots & \lambda_{1,K}^{(i)} \\ \vdots & \ddots & & \vdots \\ \vdots & & \ddots & \vdots \\ \lambda_{K,1}^{(i)} & \cdots & \cdots & \lambda_{K,K}^{(i)} \end{bmatrix}$$

Equation 23A

Alternatively, the main diagonal blocks, $\mathbf{\Lambda}^{(i)}$, $i = 1, 2, ..., D$, can be computed per Equation 23B.

$$\begin{bmatrix} \mathbf{\Lambda}^{(1)^T} & \mathbf{\Lambda}^{(2)^T} & \cdots & \mathbf{\Lambda}^{(D)^T} \end{bmatrix}^T = \left( \mathbf{F}_{(K)} \, \mathbf{R}_c \left( : , 1{:}K \right) \right),$$

Equation 23B

$\mathbf{R}_c(:, 1{:}K)$ denotes the first block column of $\mathbf{R}_c$. Namely, the first $K$ columns of $\mathbf{R}_c$. $\mathbf{F}_{(K)} \, \mathbf{R}_c(:, 1{:}K)$ can be calculated by $K^2$ parallel non-block DFTs of length $D$, using PFA_FFTs.

The estimated data vector, $\underline{\mathbf{d}}$, in Equation 7 is preferably approximated per Equation 24A.

$$\begin{aligned} \underline{\mathbf{d}} &= \mathbf{R}^{-1} \mathbf{A}^H \underline{\mathbf{r}} \\ &\approx \mathbf{R}_c^{-1} \mathbf{A}_c^H \underline{\mathbf{r}}_c \\ &= \mathbf{F}_{(K)}^H \mathbf{\Lambda}^{-1} \mathbf{\Lambda}_{\mathbf{A}}^H \mathbf{F}_{(Q)} \underline{\mathbf{r}}_c \end{aligned}$$

Equation 24A

The block diagonal matrix $\mathbf{\Lambda}^{-1}$ is per Equation 24B.

$$\mathbf{\Lambda}^{-1} = \begin{bmatrix} \mathbf{\Lambda}^{(1)^{-1}} & \mathbf{0} & \cdots & \mathbf{0} \\ \mathbf{0} & \mathbf{\Lambda}^{(2)^{-1}} & \cdots & \mathbf{0} \\ \vdots & \vdots & \ddots & \vdots \\ \mathbf{0} & \mathbf{0} & \cdots & \mathbf{\Lambda}^{(D)^{-1}} \end{bmatrix}$$

Equation 24B

The inversion of $\Lambda$ requires an inversion of K x K matrices, $\Lambda^{(i)}$, $i$ = 1, 2, ..., **D**.

Equation 24A can be rewritten as Equation 25.

$$F(\underline{\mathbf{d}}) = \mathbf{\Lambda}^{-1} \mathbf{\Lambda}_{\mathbf{A}}^{H} F(\underline{\mathbf{r}}_c)$$

Equation 25

$F(\underline{\mathbf{r}}_c)$ is per Equations 26A and 26B.

$$F(\underline{\mathbf{r}}_c) \equiv \mathbf{F}_{(Q)}\underline{\mathbf{r}}_c$$

Equation 26A

$$F(\underline{\mathbf{d}}_c) \equiv \mathbf{F}_{(K)}\underline{\mathbf{r}}_c$$

Equation 26B

Due to the block-diagonal structure of $\Lambda^{-1}$ and $\mathbf{\Lambda}_{\mathbf{A}}^{H}$, Equation 25 can be efficiently calculated as follows. The terms of Equation 25 are partitioned into $D$ blocks, as per Equation 27.

$$\begin{bmatrix} F(\underline{\mathbf{d}})^{(1)} \\ F(\underline{\mathbf{d}})^{(2)} \\ \vdots \\ F(\underline{\mathbf{d}})^{(D)} \end{bmatrix} = \begin{bmatrix} \mathbf{\Lambda}^{(1)^{-1}} & & & \\ & \mathbf{\Lambda}^{(2)^{-1}} & & \\ & & \ddots & \\ & & & \mathbf{\Lambda}^{(D)^{-1}} \end{bmatrix} \begin{bmatrix} \mathbf{\Lambda}_{\mathbf{A}}^{(1)} & & & \\ & \mathbf{\Lambda}_{\mathbf{A}}^{(2)} & & \\ & & \ddots & \\ & & & \mathbf{\Lambda}_{\mathbf{A}}^{(D)} \end{bmatrix}^{H} \begin{bmatrix} F(\underline{\mathbf{r}}_c)^{(1)} \\ F(\underline{\mathbf{r}}_c)^{(2)} \\ \vdots \\ F(\underline{\mathbf{r}}_c)^{(D)} \end{bmatrix}$$

Equation 27

Each block in Equation 27 is solved separately, per Equation 28.

$$F(\underline{\mathbf{d}})^{(i)} = \mathbf{\Lambda}^{(i)^{-1}} \mathbf{\Lambda}_{\mathbf{A}}^{H} F(\underline{\mathbf{r}}_c)^{(i)}$$

Equation 28

$F(\underline{\mathbf{d}})^{(i)}$ is a $K$ by 1 vector. $\Lambda^{(i)}$ is a $K$ by $K$ matrix, per Equation 22. $\mathbf{\Lambda}_A^{(i)}$ is an $Q$ by $K$ matrix, per Equation 14. $F(\underline{\mathbf{r}}_c)^{(i)}$ is an $Q$ by 1 vector and is composed of elements $(1+(i-1)Q)$ through $(i \cdot Q)$ of $F(\underline{\mathbf{r}}_c)$.

To avoid the direct inversion of $\Lambda^{(i)}$, Equation 28 can be solved by using $LU$ decomposition and forward and backward substitution. Equation 28 is rewritten per Equation 29.

$$\mathbf{\Lambda}^{(i)} F(\underline{\mathbf{d}})^{(i)} = \mathbf{\Lambda}_{\mathbf{A}}^{(i)^{H}} F(\underline{\mathbf{r}}_c)^{(i)}$$

Equation 29

Error! Objects cannot be created from editing field codes.

Equation 30

Error! Objects cannot be created from editing field codes. is a lower triangular matrix and Error! Objects cannot be created from editing field codes.is an upper triangular matrix.

Using $LU$ decomposition, Equation 28 is represented as, per Equation 31.

$$\mathbf{L}^{(i)} \mathbf{U}^{(i)} F(\underline{\mathbf{d}})^{(i)} = \mathbf{\Lambda}_{\mathbf{A}}^{(i)^{H}} F(\underline{\mathbf{r}})^{(i)}$$

Equation 31

$F(\underline{\mathbf{d}})^{(i)}$ in Equation 31 is solved by forward substitution, per Equation 32, and backward substitution, per Equation 33.

$$\text{Forward Substitution: } \mathbf{L}^{(i)} \underline{\mathbf{y}}^{(i)} = \mathbf{\Lambda}_{\mathbf{A}}^{(i)^{H}} F(\underline{\mathbf{r}})^{(i)}$$

Equation 32

$$\text{Backward Substitution: } \mathbf{U}^{(i)} \left[ F(\underline{\mathbf{d}}) \right]^{(i)} = \underline{\mathbf{y}}^{(i)}$$

Equation 33

Finally, **d** is determined for all blocks as per Equation 34.

$$\underline{d} = F^{-1}\left(\underline{d}\right) = F^{-1}\left(\begin{bmatrix} F(\underline{d})^{(1)} \\ F(\underline{d})^{(2)} \\ \vdots \\ F(\underline{d})^{(D)} \end{bmatrix}\right)$$

$$\text{Equation 34}$$

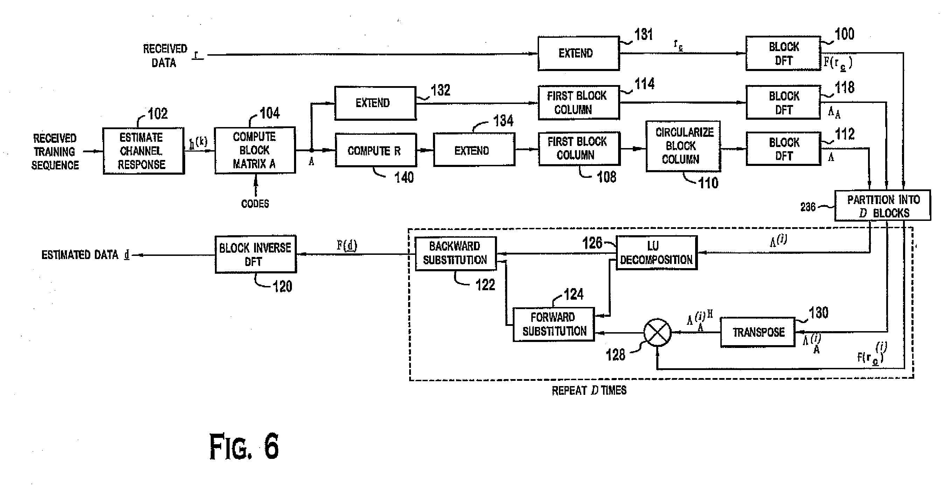

Figure 6 is a block diagram of a preferred implementation of efficient joint detection in a TDD/CDMA system. Using the received vector, $\underline{r}$, $\underline{r}_c$ is formed by inserting zeros, then a block DFT 100 of $\underline{r}_c$ is performed per Equation 26, to produce $F(\underline{r}_c)$.

Using the received training sequences, the channel impulse responses for each transmitted burst, $\underline{h}^{(k)}$, is determined by an estimate channel response block 102. Using each channelization code, $\underline{c}^{(k)}$ and the channel impulse response, $\underline{h}^{(k)}$, the system matrix, **A**, is determined by compute block matrix **A** block 104 per Equation 2.

To determine $\Lambda_A$, the system matrix **A** is extended by extend block 132, to use all received chips in the observation interval. The first block column of the block-circulant matrix $\mathbf{A}_c$ is determined by selecting the first $K$ columns of the extended **A** matrix by first block column block 114. By taking a block DFT using PFA-FFT 118 using PFA-FFT, $\Lambda_A$ is determined.

To determine $\Lambda$, **R** is first determined by compute **R** block 140. For an MMSE solution, $\mathbf{R} = \mathbf{A}^H \mathbf{A} + \sigma^2 \mathbf{I}$ is used; for a zero forcing solution, $\mathbf{R} = \mathbf{A}^H \mathbf{A}$ is used. Due to the size of the extended **A, R** is also extended by extend block 134. The first block column of the extended **R** matrix is determined by selecting the first K columns of the extended **R** matrix by first block column block 108. The first block column of the extended **R** matrix is circularized by a circularize block column block 110. It becomes the first block column of a block-circulant $\mathbf{R}_c$. By taking a block DFT using PFA-FFT by block DFT block 112, $\Lambda$ is determined.

To efficiently compute the estimated data vector $\underline{d}$, $\Lambda_A$, $\Lambda$, and $F(\underline{r}_c)$ are divided into blocks $\mathbf{\Lambda}_\mathbf{A}^{(i)}$, $\Lambda^{(i)}$, and $F(\underline{r}_c)^{(i)}$, $i = 1,2, ..., D$, respectively, exploiting the block-diagonal structures of $\Lambda_\mathbf{A}$ and $\Lambda$, by partition block 136. The complex conjugate transpose of $\mathbf{\Lambda}_\mathbf{A}^{(i)}$, $\mathbf{\Lambda}_\mathbf{A}^{(i)H}$, is determined by a transpose block 130. A multiplier 128 multiplies $\mathbf{\Lambda}_\mathbf{A}^{(i)H}$ by $F(\underline{r}_c)^{(i)}$. $\Lambda^{(i)}$ is decomposed using $LU$ decomposition by a $LU$ decomposition block 126, per Equation 30. By performing forward and backward substitution, per Equations 31-33, using forward and backward substitution blocks 124 and 122, respectively, $F(\underline{d})^{(i)}$ is determined. By repeating the $LU$ decomposition and forward and backward substitution $D$ times, $F(\underline{d})$ is found. Taking a inverse block DFT using PFA-FFT of $F(\underline{d})$ by block inverse DFT block 120, $\underline{d}$ is estimated.

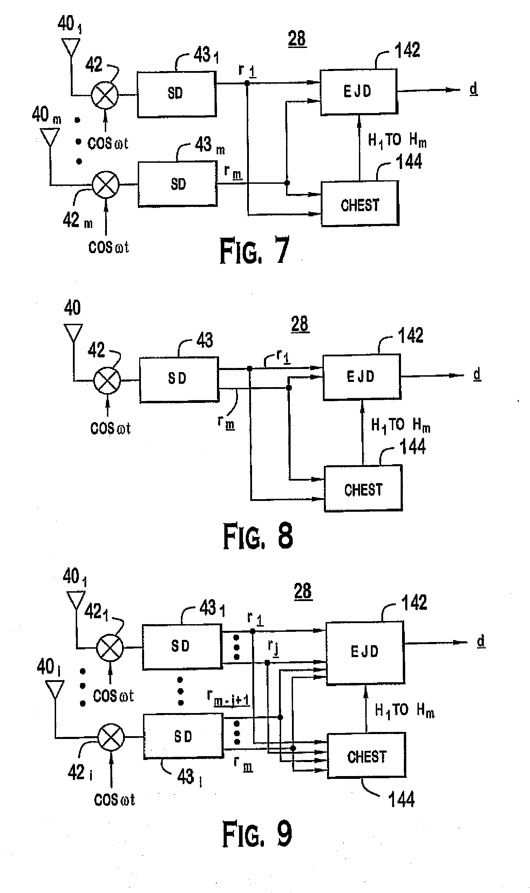

Figures 7, 8 and 9 are simplified diagrams of receivers applying efficient joint detection to multiple reception antennas and/or fractional (multiple chip rate) sampling. A receiver 28 with multiple reception antennas is shown in Figure 7. Transmitted bursts are received by each antenna $40_1$ to $40_m$ (40). Each antennas' version of the received bursts are reduced to baseband, such as by demodulators $42_1$ to $42_m$. The baseband signals for each antenna are sampled by sampling devices $43_1$ to $43_m$ to produce a received vector, $\underline{r}_1$ to $\underline{r}_m$, for each antenna 40. The samples corresponding to the midamble are processed by a channel estimation device 144 to produce channel response matrices, $H_1$ to $H_m$, for each antenna 40. The received data vector, $\underline{d}$, is determined by an efficient joint detection device 142 using the received vectors and the channel response matrices.

A receiver 28 sampling using fraction sampling is shown in Figure 8. Transmitted bursts are received by the antenna 40. The received bursts are reduced to baseband, such as by a demodulator 42. The baseband signal is sampled by a sampling device 43 to produce factional samples as received vectors, $\underline{r}_1$ to $\underline{r}_m$. Each received vector represents chip rate samples sampled at a fraction of a chip offset. To illustrate, for twice the chip rate sampling, two received vectors $\underline{r}_1$ and $\underline{r}_2$ are produced. Each of those vectors has samples spaced by half a chip in time. Samples corresponding to the midamble are processed by a channel estimation device 144 to produce channel response matices, $H_1$ to $H_m$, for each set of fractional samples. The received data vector, $\underline{d}$, is determined by an efficient joint detection device 142 using the received vectors and the channel response matrices.

A receiver 28 with multiple reception antennas and using fractional sampling is shown in Figure 9. Transmitted bursts are received by each antenna $40_1$ to $40_i$ (40). Each antennas' version of the received bursts are reduced to baseband, such as by demodulators $42_1$ to $42_i$. The baseband signals for each antenna are sampled by sampling devices

$43_1$ to 43j to produce a received vectors, $\underline{r}_1$ to $\underline{r}_m$. The received vectors for each antenna correspond to each multiple of the chip rate samples. The samples corresponding to the midamble are processed by a channel estimation device 144 to produce channel response matices, $\mathbf{H}_1$ to $\mathbf{H}_m$, for each antenna's fractional samples. The received data vector, $\underline{d}$, is determined by an efficient joint detection device 142 using the received vectors and the channel response matrices.

In applying efficient joint detection to either receive diversity, fractional sampling or both, the received communication bursts are viewed as $M$ virtual chip rate received bursts. To illustrate, for twice the chip rate sampling and two antenna receive diversity, the received bursts are modeled as four ($M$=4) virtual chip rate received bursts.

Each received burst is a combination of $K$ transmitted bursts. Each of the $K$ transmitted bursts has its own code. The channel impulse response vector of the $k^{th}$ out of $K$ codes and the $m^{th}$ out of the $M$ virtual received bursts is $\underline{h}^{(k,m)}$. $\underline{h}^{(k,m)}$ has a length $W$ and is estimated from the midamble samples of the burst of the $k^{th}$ code of the $m^{th}$ virtual received burst.

Each of the $N$ data symbols of the burst of the $k^{th}$ code is per Equation 35.

$$\underline{\mathbf{d}}^{(k)} = \begin{bmatrix} d_1^{(k)} & d_2^{(k)} & \cdots & d_N^{(k)} \end{bmatrix}^T, \qquad 1 \le k \le K$$

<div align="right">Equation 35</div>

The code of the $k^{th}$ burst is per Equation 36.

$$\underline{\mathbf{c}}^{(k)} = \begin{bmatrix} c_1^{(k)} & c_2^{(k)} & \cdots & c_Q^{(k)} \end{bmatrix}^T, \qquad 1 \le k \le K$$

<div align="right">Equation 36</div>

The symbol response of the $k^{th}$ code's contribution to the $m^{th}$ virtual burst, $\underline{b}^{(k,m)}$ is per Equation 37.

$$\underline{\mathbf{b}}^{(k,m)} = \underline{\mathbf{h}}^{(k,m)} \otimes \underline{\mathbf{c}}^{(k)}$$

<div align="right">Equation 37</div>

The length of the symbol response is $Q$+$W$-1. $Q$ is the spreading factor. The system matrix, $A^{(m)}$, for each $m^{th}$ received burst is per Equation 38.

<div align="right">Equation 38</div>

Each block $\mathbf{B}^{(m)}$ is of size ($Q$+$W$-1) by $K$ and is per Equation 39.

$$\mathbf{B}^{(m)} = \left[ \underline{\mathbf{b}}^{(1,m)} \quad \underline{\mathbf{b}}^{(2,m)} \quad \cdots \quad \underline{\mathbf{b}}^{(K,m)} \right]$$

$$\text{Equation 39}$$

The overall system matrix **A** is per Equation 40.

$$\mathbf{A} = \begin{bmatrix} \mathbf{A}^{(1)} \\ \mathbf{A}^{(2)} \\ \vdots \\ \mathbf{A}^{(M)} \end{bmatrix}$$

$$\text{Equation 40}$$

As shown in Equation 38, each sub-system matrix $\mathbf{A}^{(m)}$ is block Toeplitz. The overall received vector of the $M$ virtual bursts is of size $M(NQ+W\text{-}1)$ and is per Equation 41.

$$\underline{\mathbf{r}} = \left[ \underline{\mathbf{r}}_1^T \quad \underline{\mathbf{r}}_2^T \quad \cdots \quad \underline{\mathbf{r}}_M^T \right]^T$$

$$\text{Equation 41}$$

The $m^{th}$ received vector $\underline{\mathbf{r}}_m$ is of size $NQ+W\text{-}1$ by 1.
Equation 42 is a model for the overall received vector.

$$\underline{\mathbf{r}} = \mathbf{A}\,\underline{\mathbf{d}} + \underline{\mathbf{n}}$$

$$\text{Equation 42}$$

$\underline{\mathbf{n}}$ is the noise variance.
Each $m^{th}$ received virtual burst is per Equation 43.

$$\underline{\mathbf{r}}_m = \mathbf{A}^{(m)}\mathbf{d} + \underline{\mathbf{n}}_m$$

$$\text{Equation 43}$$

$\underline{\mathbf{n}}_m$ is the noise variance for the $m^{th}$ received virtual burst.
To solve for the data vector $\underline{\mathbf{d}}$ in Equation 42, a block linear equalizer with either a zero forcing or minimum mean square error (MMSE) approach may be used per Equation 44.

$$\hat{\underline{\mathbf{d}}} = \mathbf{R}^{-1}\,\mathbf{A}^H\,\underline{\mathbf{r}}$$

$$\text{Equation 44}$$

**R** is the covariance matrix.

For a zero forcing solution, **R** is per Equation 45.

$$\mathbf{R} = \sum_{m=1}^{M} \mathbf{A}^{(m)H} \mathbf{A}^{(m)} = \mathbf{A}^{H}\mathbf{A}$$

<div align="right">Equation 45</div>

For a MMSE solution, **R** is per Equation 46.

$$\mathbf{R} = \sum_{m=1}^{M} \mathbf{A}^{(m)H} \mathbf{A}^{(m)} + \sigma^2 \mathbf{I} = \mathbf{A}^{H}\mathbf{A} + \sigma^2 \mathbf{I}$$

<div align="right">Equation 46</div>

The covariance matrix for either the zero forcing or MMSE solution is a block Toeplitz. To apply a discrete Fourier transform to the block-Toeplitz $\mathbf{A}^{(m)}$ matix, a block-circulant approximation of $\mathbf{A}^{(m)}$, $\mathbf{A}_c^{(m)}$ is used. To make $\mathbf{A}^{(m)}$ a block-square matrix, $\mathbf{A}^{(m)}$ is extended. The extended $\mathbf{A}^{(m)}$ matrix is then approximated to a block circulant matrix $\mathbf{A}_c^{(m)}$.
The $\mathbf{A}_c^{(m)}$ matrix is composed of $D$ by $D$ blocks. Each block is of size $Q$ by $K$. Accordingly, the size of $\mathbf{A}_c^{(m)}$ becomes $DQ$ by $DK$. To include all the elements of $\mathbf{A}^{(m)}$, $D$ is chosen to be an integer larger than $D_{min}$ as determined per Equation 47.

$$D_{\min} = \left\lceil N + \frac{(W-1)}{Q} \right\rceil$$

<div align="right">Equation 47</div>

$\lceil \cdot \rceil$ represents a round up to an integer function.
The covariance matrix **R** is a block-square matrix of size $NK$ by $NK$ with blocks of size $K$ by $K$. For **R** to be compatible with the extended $\mathbf{A}_c^{(m)}$ matrix, $R$ is extended to the size $DK$ by $DK$ by zero-padding and approximating the extended $R$ to a block circulant covariance matrix $\mathbf{R}_c$. For the received vector, $\mathbf{r}^{(m)}$, to be compatible with $\mathbf{A}_c^{(m)}$ and $\mathbf{R}_c$, $\underline{\mathbf{r}}^{(m)}$ is extended to a $DQ$ by 1 vector, $\underline{\mathbf{r}}_c^{(m)}$ by zero padding.
After extending the received vectors, $\underline{\mathbf{r}}^{(m)}$, the over all received vector is per Equation 48.

$$\underline{\mathbf{r}}_c = \left[ \underline{\mathbf{r}}_c^{(1)T} \quad \underline{\mathbf{r}}_c^{(2)T} \quad \cdots \quad \underline{\mathbf{r}}_c^{(M)T} \right]^T$$

Equation 48

Each block-circulant matrix $\mathbf{A}_c^{(m)}$ is diagonalized to a block-diagonal matrix by block discrete Fourier transform matrices per Equation 49.

$$\mathbf{A}_c^{(m)} = \mathbf{F}_{(Q)}^{H} \, \Lambda_{\mathbf{A}}^{(m)} \, \mathbf{F}_{(K)}$$

<div align="right">Equation 49</div>

$\mathbf{F}_{(Q)}$ is per Equation 50.

$$\mathbf{F}_{(Q)} = \mathbf{F} \otimes \mathbf{I}_Q$$

<div align="right">Equation 50</div>

$\mathbf{F}_{(K)}$ is per Equation 51.

$$\mathbf{F}_{(K)} = \mathbf{F} \otimes \mathbf{I}_K$$

<div align="right">Equation 51</div>

F is a discrete Fouriertrans form matrix of size *D* by *D* and is an *n* by *n* identity matrix. $\Lambda_A{}^{(m)}$ is a block diagonal matrix of the form of Equation 52.

$$\mathbf{\Lambda}_\mathbf{A}^{(m)} = \begin{bmatrix} \mathbf{\Lambda}_\mathbf{A}^{(1,m)} & \mathbf{0} & \cdots & \mathbf{0} \\ \mathbf{0} & \mathbf{\Lambda}_\mathbf{A}^{(2,m)} & \cdots & \mathbf{0} \\ \vdots & \vdots & \ddots & \vdots \\ \mathbf{0} & \mathbf{0} & \cdots & \mathbf{\Lambda}_\mathbf{A}^{(D,m)} \end{bmatrix}$$

<div align="right">Equation 52</div>

$\Lambda_A{}^{(l,m)}$ for *l* = 1,...,D, and *m*=1,...,M is a non-zero block of size *Q* by *K*. 0 is a zero matrix of size *Q* by *K* having all zero elements.

$\Lambda_A{}^{(l,m)}$ is alternately computed per Equation 53.

$$\mathbf{\Lambda}_\mathbf{A}^{(m)} = diag^B \left( \mathbf{F}_{(Q)}\, \mathbf{A}_c^{(m)}\left( : , 1{:}K \right) \right)$$

<div align="right">Equation 53</div>

$\mathbf{A}_c^{(m)}$ (:,1:K) is the first block column of $\mathbf{A}_c^{(m)}$. The first block column having *K* columns. To determine $\mathbf{\Lambda}_\mathbf{A}^{(m)}$, preferably $\mathbf{F}_{(Q)}\, \mathbf{A}_c^{(m)}$ (:,1K) is determined by *QK* parallel non-block DFTs of length *D*, using PFA-FFTs. The block circulant matrix $\mathbf{R_c}$ is also preferably diagonalized to the block diagonal matrix $\Lambda_\mathbf{R}$ by a block DFT matrix $\mathbf{F}_{(K)} = \mathbf{F} \otimes \mathbf{I}_K$ as per Equation 54.

$$\mathbf{R}_c = \mathbf{F}_{(K)}^H\, \mathbf{\Lambda}_\mathbf{R}\, \mathbf{F}_{(K)}$$

<div align="right">Equation 54</div>

The block diagonal matrix $\Lambda_\mathbf{R}$ is composed by blocks $\mathbf{\Lambda}_\mathbf{R}^{(l)}$, *l* = 1, ..., *D* of size *K* by *K* in its main diagonal block, per Equation 55.

$$\boldsymbol{\Lambda}_{\mathbf{R}} = \begin{bmatrix} \boldsymbol{\Lambda}_{\mathbf{R}}^{(1)} & \mathbf{0} & \cdots & \mathbf{0} \\ \mathbf{0} & \boldsymbol{\Lambda}_{\mathbf{R}}^{(2)} & \cdots & \mathbf{0} \\ \vdots & \vdots & \ddots & \vdots \\ \mathbf{0} & \mathbf{0} & \cdots & \boldsymbol{\Lambda}_{\mathbf{R}}^{(D)} \end{bmatrix}$$

Another approach to determine $\Lambda_{\mathbf{R}}$ is per Equation 56.

$$\boldsymbol{\Lambda}_{\mathbf{R}} = diag^B \left( \mathbf{F}_{(K)} \ \mathbf{R}_c \left( : , 1:K \right) \right)$$

<div align="right">

Equation 56

</div>

$\mathbf{R}_c(:, 1:K)$ is the first block column of $\mathbf{R}_c$. $\mathbf{F}_{(K)} \mathbf{R}_c(:, 1:K)$ is preferably determined using $K^2$ parallel non-block DFTs of length $D$. In one implementation, the $K^2$ parallel non-block DFTs are implemented using $K^2$ parallel non-block prime factor algorithm fast Fourier transforms (PFA-FFTs) of length $D$.

Preferably to perform the block equalization of Equation 44, the matched filtering is approximated per Equation 57.

$$\begin{aligned} \mathbf{A}^H \ \underline{\mathbf{r}} \ &\approx \ \mathbf{A}_c^H \ \underline{\mathbf{r}}_c \ = \ \sum_{m=1}^{M} \mathbf{A}^{(m)H} \ \underline{\mathbf{r}}_c^{(m)} \\ &= \ \sum_{m=1}^{M} \left( \mathbf{F}_{(Q)}^H \ \boldsymbol{\Lambda}_{\mathbf{A}}^{(m)} \ \mathbf{F}_{(K)} \right)^H \ \underline{\mathbf{r}}_c^{(m)} \\ &= \ \mathbf{F}_{(K)}^H \ \sum_{m=1}^{M} \boldsymbol{\Lambda}_{\mathbf{A}}^{(m)H} \ \mathbf{F}_{(Q)} \ \underline{\mathbf{r}}_c^{(m)} \end{aligned}$$

<div align="right">

Equation 57

</div>

The block-diagonalization of $\mathbf{A}_c^{(m)}$ is per Equation 58.

$$\mathbf{A}_c = \begin{bmatrix} \mathbf{A}_c^{(1)T} & \mathbf{A}_c^{(2)T} & \cdots & \mathbf{A}_c^{(M)T} \end{bmatrix}^T$$

<div align="right">

Equation 58

</div>

The estimation of the data vector, $\underline{\hat{\mathbf{d}}}$, is per Equation 59.

$$\hat{\underline{d}} = \mathbf{R}^{-1}\,\mathbf{A}^{H}\,\underline{r} \approx \mathbf{R}_c^{-1}\,\mathbf{A}_c^{H}\,\underline{r}_c$$

$$= \left(\mathbf{F}_{(K)}^{H}\mathbf{\Lambda}_{\mathbf{R}}\mathbf{F}_{(K)}\right)^{-1}\mathbf{F}_{(K)}^{H}\sum_{m=1}^{M}\left(\mathbf{\Lambda}_{\mathbf{A}}^{(m)H}\,\mathbf{F}_{(Q)}\,\underline{r}_c^{(m)}\right)$$

$$= \mathbf{F}_{(K)}^{H}\,\mathbf{\Lambda}_{\mathbf{R}}^{-1}\,\mathbf{F}_{(K)}\,\mathbf{F}_{(K)}^{H}\sum_{m=1}^{M}\left(\mathbf{\Lambda}_{\mathbf{A}}^{(m)H}\,\mathbf{F}_{(Q)}\,\underline{r}_c^{(m)}\right)$$

$$= \mathbf{F}_{(K)}^{H}\,\mathbf{\Lambda}_{\mathbf{R}}^{-1}\sum_{m=1}^{M}\left(\mathbf{\Lambda}_{\mathbf{A}}^{(m)H}\,\mathbf{F}_{(Q)}\,\underline{r}_c^{(m)}\right)$$

$$= \mathbf{F}_{(K)}^{H}\,\underline{y}$$

Equation 59

The vector $\underline{y}$ is of size DK by 1 and is per Equation 60.

$$\underline{y} = \mathbf{\Lambda}_{\mathbf{R}}^{-1}\sum_{m=1}^{M}\left(\mathbf{\Lambda}_{\mathbf{A}}^{(m)}\,\mathbf{F}_{(Q)}\,\underline{r}_c^{(m)}\right)$$

$$= \left[\underline{y}^{(1)T}\quad \underline{y}^{(2)T}\quad \cdots\quad \underline{y}^{(D)T}\right]^{T}$$

Equation 60

$\underline{y}^{(l)}$, $l = 1, \ldots D$ is a vector of size $K$ by 1.

Preferably to determine $\underline{y}$, $\mathbf{F}_{(Q)}\,\underline{r}_c^{(m)}$ is determined using $Q$ parallel non-block DFTs of a length $D$. In one implementation , the $Q$ parallel non-block DFTs are implemented using $Q$ parallel non-block PFA-FFTs of length $D$. $\mathbf{\Lambda}_{\mathbf{R}}^{-1}$ is a block diagonal matrix having blocks of size $K$ by $K$ in the main diagonal and is per Equation 61.

$$\mathbf{\Lambda}_{\mathbf{R}}^{-1} = \begin{bmatrix} \mathbf{\Lambda}_{\mathbf{R}}^{(1)-1} & \mathbf{0} & \cdots & \mathbf{0} \\ \mathbf{0} & \mathbf{\Lambda}_{\mathbf{R}}^{(2)-1} & \cdots & \mathbf{0} \\ \vdots & \vdots & \ddots & \vdots \\ \mathbf{0} & \mathbf{0} & \cdots & \mathbf{\Lambda}_{\mathbf{R}}^{(D)-1} \end{bmatrix}$$

Equation 61

Each $\mathbf{\Lambda}_{\mathbf{R}}^{(l)-1}$, $l = 1, \ldots, D$, is a block of size $K$ by $K$.

Preferably using the block diagonal structure of $\mathbf{\Lambda}_{\mathbf{R}}^{-1}$, , $\underline{y}^{(l)}$ is determined by the Cholesky decomposition of $\mathbf{\Lambda}_{\mathbf{R}}^{(l)}$ and forward and backward substitution in parallel. Alternately, $\mathbf{\Lambda}_{\mathbf{R}}^{(l)}$ is directly inverted.

To perform the Cholesky decomposition, a vector $\sum\limits_{m=1}^{M}\left(\Lambda_{\mathbf{A}}^{(m)^{H}} \mathbf{F}_{(Q)} \underline{\mathbf{r}}_c^{(m)}\right)$ is divided into $D$ blocks of a size $K$ by 1, per Equation 62.

$$
\begin{aligned}
\underline{\mathbf{x}} &= \sum_{m=1}^{M}\left(\Lambda_{\mathbf{A}}^{(m)^{H}} \mathbf{F}_{(Q)} \underline{\mathbf{r}}_c^{(m)}\right) \\
&= \left[\underline{\mathbf{x}}^{(1)^{T}} \quad \underline{\mathbf{x}}^{(2)^{T}} \quad \cdots \quad \underline{\mathbf{x}}^{(D)^{T}}\right]^{T}
\end{aligned}
$$

Equation 62

A Cholesky factor $\mathbf{G}^{(l)}$ of $\Lambda_{\mathbf{R}}^{(l)}$ is determined using a factorization, per Equation 63.

$$
\Lambda_{\mathbf{R}}^{(l)} = \mathbf{G}^{(l)} \mathbf{G}^{(l)^{H}}
$$

Equation 63

Using the Cholesky factor $\mathbf{G}^{(l)}$, each $\underline{\mathbf{y}}^{(l)}$ is determined by forward and backward substitution separately per Equations 64, 65 and 66.

$$
\Lambda_{\mathbf{R}}^{(l)} \underline{\mathbf{y}}^{(l)} = \mathbf{G}^{(l)} \mathbf{G}^{(l)^{H}} \underline{\mathbf{y}}^{(l)} = \underline{\mathbf{x}}^{(l)}
$$

Equation 64

$$
Foward \; Substitution : Find \; \underline{\mathbf{z}}^{(l)} \; in \; \mathbf{G}^{(l)} \underline{\mathbf{z}}^{(l)} = \underline{\mathbf{x}}^{(l)}, \; where \; \underline{\mathbf{z}}^{(l)} = \mathbf{G}^{(l)^{H}} \underline{\mathbf{y}}^{(l)}
$$

Equation 65

$$
Backward \; Substitution : Find \; \underline{\mathbf{y}}^{(l)} \; in \; \underline{\mathbf{z}}^{(l)} = \mathbf{G}^{(l)^{H}} \underline{\mathbf{y}}^{(l)}
$$

Equation 66

By performing a block inverse DFT of $\underline{\mathbf{y}}$, the data vector $\underline{\mathbf{d}}$ is estimated as $\hat{\underline{\mathbf{d}}}$. Preferably, the block inverse DFT is implemented using $K$ parallel non-block inverse PFA-FFTs of a length $D$.

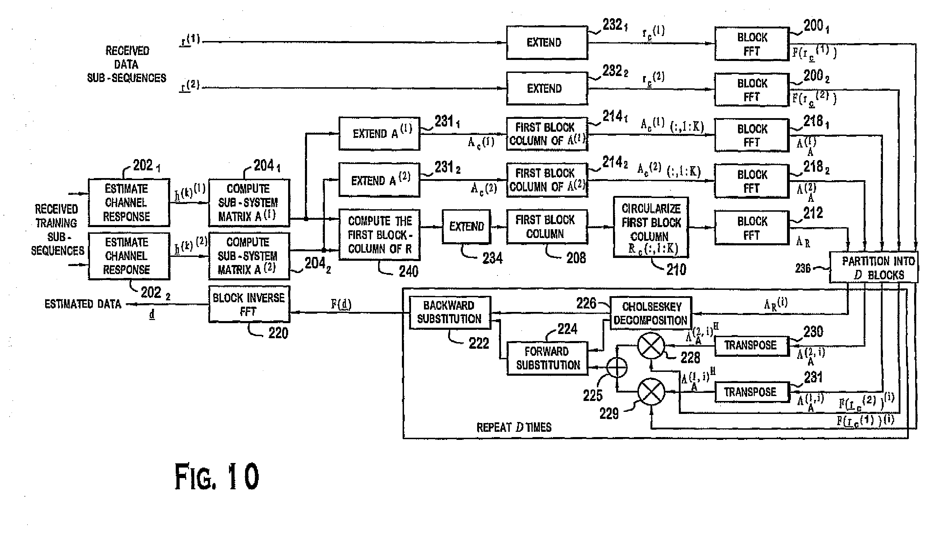

Figure 10 is a block diagram of a preferred implementation of efficient joint detection in a TDD/CDMA system. Although Figure 10 illustrates using two sets of samples, the figure can be extended to other multiple sets. Using the received vector for each set of chip rate samples, $\underline{\mathbf{r}}_1$ and $\underline{\mathbf{r}}_2$, $\underline{\mathbf{r}}_c^{(1)}$ and $\underline{\mathbf{r}}_c^{(2)}$ is formed by inserting zeros, by Extend blocks $232_1$ and $232_2$, respectively. A block DFT $200_1$ and $200_2$ using PFA-FFT of $\underline{\mathbf{r}}_c^{(1)}$ and $\underline{\mathbf{r}}_c^{(2)}$ is then performed, to produce $\mathbf{F}_{(Q)} \underline{\mathbf{r}}_c^{(1)}$ and $\mathbf{F}_{(Q)} \underline{\mathbf{r}}_c^{(2)}$.

Using the received training sequences, the channel impulse responses for each chip rate version of each

transmitted burst, $\underline{\mathbf{h}}^{(k)(1)}$ and $\underline{\mathbf{h}}^{(k)(2)}$, is determined by estimate channel response blocks $202_1$ and $202_2$. Using each channelization code, $\underline{\mathbf{c}}^{(k)}$ and the channel impulse response, $\underline{\mathbf{h}}^{(k)(1)}$ and $\underline{\mathbf{h}}^{(k)(2)}$, each system matrix, $\mathbf{A}^{(1)}$ and $\mathbf{A}^{(2)}$, is determined by compute sub-system matrix blocks $204_1$ and $204_2$ per Equations 37 and 38.

To determine $\mathbf{\Lambda}_A^{(1)}$ and $\mathbf{\Lambda}_A^{(2)}$, each system matrix, $\mathbf{A}^{(1)}$ and $\mathbf{A}^{(2)}$, is extended by extend blocks $231_1$ and $231_2$. The first block column of each block-circulant matrix, $\mathbf{A}^{(1)}$ and $\mathbf{A}^{(2)}$, is determined by selecting the first $K$ columns of the extended $\mathbf{A}^{(m)}$ matrix by first block column blocks $214_1$ and $214_2$. By taking block DFTs $218_1$ and $218_2$, $\mathbf{\Lambda}_A^{(1)}$ and $\mathbf{\Lambda}_A^{(2)}$ are determined using a PFA-FFT.

To determine $\Lambda_\mathbf{R}$, the first block column of $\mathbf{R}$ is determined by compute first block column $\mathbf{R}$ block 240. The first column of $\mathbf{R}$ is extended by extend block 234. The first block column of the extended $\mathbf{R}$ is determined by a first block column determining device 208. The first block column of the extended $\mathbf{R}$ matrix is circularized, $\mathbf{R}_c$, by a circularize block column block 210. By taking a block DFT by block DFT block 212, $\mathbf{\Lambda}_\mathbf{R}^{(\ )}$ is determined using a PFA-FFT.

To efficiently compute the estimated data vector $\underline{\mathbf{d}}$, each of $\mathbf{\Lambda}_A^{(1)}$, $\mathbf{\Lambda}_A^{(2)}$ and $\mathbf{F}\!\left(\underline{\mathbf{r}}_c^{(1)}\right)$ and $\mathbf{F}\!\left(\underline{\mathbf{r}}_c^{(2)}\right)$ as well as $\Lambda_\mathbf{R}$ are used. Each of $\mathbf{F}\!\left(\underline{\mathbf{r}}_c^{(1)}\right)$, $\mathbf{F}\!\left(\underline{\mathbf{r}}_c^{(2)}\right)$, $\mathbf{\Lambda}_A^{(1)}$, $\mathbf{\Lambda}_A^{(2)}$ and $\Lambda_\mathbf{R}$ is divided into D blocks, by partition block 236. The complex conjugate transpose of each of $\mathbf{\Lambda}_A^{(1,i)}$ and $\mathbf{\Lambda}_A^{(2,i)}$, and $\mathbf{\Lambda}_A^{(2,i)^H}$, where i is the i$^{th}$ block, is determined by transpose blocks 230, 231. A multiplier 228 multiplies $\mathbf{\Lambda}_A^{(2,i)^H}$ by $\mathbf{F}_{(Q)}\!\left(\underline{\mathbf{r}}_c^{(2)}\right)^{(i)}$. A multiplier 229 multiplies $\mathbf{\Lambda}_A^{(1,i)^H}$ by $\mathbf{F}_{(Q)}\!\left(\underline{\mathbf{r}}_c^{(1)}\right)^{(i)}$. A summer 225 sums the multiplied results per Equation 62. $\mathbf{\Lambda}_\mathbf{R}^{(i)}$ is decomposed using Cholesky decomposition 226, per Equation 63. By performing forward and backward substitution, per Equations 65 and 66, using forward and backward substitution blocks 224 and 222, respectively, $F(\underline{\mathbf{d}})$ is determined. Taking an inverse block DFT using PFA-FFT of $F(\underline{\mathbf{d}})$ by block inverse DFT block 220 using a PFA-FFT, $\hat{\underline{\mathbf{d}}}$ is estimated.

ITEMISED LIST

Item 1. A method for detecting data from K data signals transmitted over a shared spectrum in a code division multiple access format, the method comprising:

receiving and sampling a combined signal over the shared spectrum as a plurality of received vector versions, the combined signal including the K transmitted data signals;
producing a plurality of system matrices and an associated covariance matrix using codes and estimated impulse responses of the K data signals, each system matrix corresponding to a received vector version;
extending and approximating the system and covariance matrices as block circulant matrices;
determining a diagonal matrix of each of the extended and approximated system and covariance matrices, using a block column of the extended and approximated system and covariance matrices;
extending and taking a Fourier transform of each received vector version;
taking products of the diagonal matrices and the extended received vector versions;
summing the products; and
estimating data of the K data signals using an inverse Fourier transform and the summed products.

Item 2. The method of item 1 wherein the Fourier transforms are performed using a prime factor algorithm fast Fourier transform.

Item 3. The method of item 1 wherein each received vector version corresponds to a different reception antenna.

Item 4. The method of item 1 wherein the combined signal is sampled at a multiple of a chip rate of the K data signals and each received vector version corresponds to a different chip rate multiple.

Item 5. The method of item 1 wherein the K data signals are received over a plurality of antennas and sampled at a multiple of a chip rate of the K data signals and each received vector version corresponds to a different antenna and chip rate multiple combination.

Item 6. The method of item 1 further comprising partitioning the diagonal matrices into a plurality of partitions.

Item 7. The method of item 1 wherein the estimating data of the K data signals includes performing LU decomposition , forward substitution and backward substitution.

Item 8. The method of item 1 wherein the estimating data of the K data signals includes performing Cholesky decomposition, forward substitution and backward substitution.

Item 9. The method of item 1 wherein LU decomposition or Cholesky decomposition is performed on the diagonal of the covariance matrix.

Item 10. A user equipment for detecting data from K data signals transmitted over a shared spectrum in a code division multiple access format, the user equipment comprising:

means for receiving and sampling a combined signal over the shared spectrum as a plurality of received vector versions, the combined signal including the $K$ transmitted data signals;
means for producing a plurality of system matrices and an associated covariance matrix using codes and estimated impulse responses of the K data signals, each system matrix corresponding to a received vector version;
means for extending and approximating the system and covariance matrices as block circulant matrices;
means for determining a diagonal matrix of each of the extended and approximated system and covariance matrices, using a block column of the extended and approximated system and covariance matrices;
means for extending and taking a Fourier transform of each received vector version;
means for taking products of the diagonal matrices and the extended received vector versions;
means for summing the products; and
means for estimating data of the K data signals using an inverse Fourier transform and the summed products.

Item 11. The user equipment of item 10 wherein the Fourier transforms are performed using a prime factor algorithm fast Fourier transform.

Item 12. The user equipment of item 10 wherein each received vector version corresponds to a different reception antenna.

Item 13. The user equipment of item 10 wherein the combined signal is sampled at a multiple of a chip rate of the K data signals and each received vector version corresponds to a different chip rate multiple.

Item 14. The user equipment of item 10 wherein the K data signals are received over a plurality of antennas and sampled at a multiple of a chip rate of the K data signals and each received vector version corresponds to a different antenna and chip rate multiple combination.

Item 15. The user equipment of item 10 further comprising means for partitioning the diagonal matrices into a plurality of partitions.

Item 16. The user equipment of item 10 wherein the estimating data of the K data signals includes performing LU decomposition , forward substitution and backward substitution.

Item 17. The user equipment of item 10 wherein the estimating data of the K data signals includes performing Cholesky decomposition, forward substitution and backward substitution.

Item 18. The user equipment of item 10 wherein LU decomposition is performed on the diagonal of the covariance matrix.

Item 19. The user equipment of item 10 wherein Cholesky decomposition is performed on the diagonal of the covariance matrix.

Item 20. A user equipment for detecting data from K data signals transmitted over a shared spectrum in a code division multiple access format, the user equipment comprising:

an antenna and a sampling device for receiving a combined signal over the shared spectrum as a plurality of received vector versions, the combined signal including the K transmitted data signals;
a plurality of compute sub-system matrix blocks for producing a plurality of system matrices using estimated impulse responses of the K data signals, each system matrix corresponding to a received vector version;
a compute covariance matrix block for producing a covariance matrix associated with the system matrices;
a plurality of extension blocks for extending the system and covariance matrices;
a plurality of first block column devices for approximating the extended system and covariance matrices as block circulant matrices;
a plurality of block Fourier transform devices for determining a diagonal matrix of each of the extended and approximated system and covariance matrices, using the block column of the extended and approximated system and covariance matrices;
an extension device for extending each received vector version;
a block Fourier transform device for taking a Fourier transform of each received vector version;
a plurality of multipliers for taking products of the diagonal matrices and the extended received vector versions;
a summer for summing the products; and
a block inverse Fourier transform device for estimating data of the K data signals using an inverse Fourier transform and the summed products.

Item 21. The user equipment of item 20 wherein the Fourier transforms are performed using a prime factor algorithm fast Fourier transform.

Item 22. The user equipment of item 20 wherein each received vector version corresponds to a different reception antenna.

Item 23. The user equipment of item 20 wherein the combined signal is sampled at a multiple of a chip rate of the K data signals and each received vector version corresponds to a different chip rate multiple.

Item 24. The user equipment of item 20 wherein the K data signals are received over a plurality of antennas and sampled at a multiple of a chip rate of the K data signals and each received vector version corresponds to a different antenna and chip rate multiple combination.

Item 25. The user equipment of item 20 further comprising partitioning device for partitioning the diagonal matrices into a plurality of partitions.

Item 26. The user equipment of item 20 further comprising a LU decomposition device for performing LU decomposition on the diagonal of the covariance matrix and a forward substitution and a backward substitution devices for producing an inverse Fourier transform of the estimated data vector.

Item 27. The user equipment of item 20 further comprising a Cholesky decomposition device for performing Cholesky decomposition on the diagonal of the covariance matrix and a forward substitution and a backward substitution devices for producing an inverse Fourier transform of the estimated data vector.

Item 28. A base station for detecting data from K data signals transmitted over a shared spectrum in a code division multiple access format, the base station comprising:

means for receiving and sampling a combined signal over the shared spectrum as a plurality of received vector versions, the combined signal including the K transmitted data signals;
means for producing a plurality of system matrices and an associated covariance matrix using codes and estimated impulse responses of the K data signals, each system matrix corresponding to a received vector version;
means for extending and approximating the system and covariance matrices as block circulant matrices;
means for determining a diagonal matrix of each of the extended and approximated system and covariance matrices, using a block column of the extended and approximated system and covariance matrices;
means for extending and taking a Fourier transform of each received vector version;
means for taking products of the diagonal matrices and the extended received vector versions;
means for summing the products; and
means for estimating data of the K data signals using an inverse Fourier transform and the summed products.

Item 29. The base station of item 28 wherein the Fourier transforms are performed using a prime factor algorithm fast Fourier transform.

Item 30. The base station of item 28 wherein each received vector version corresponds to a different reception antenna.

Item 31. The base station of item 28 wherein the combined signal is sampled at a multiple of a chip rate of the K data signals and each received vector version corresponds to a different chip rate multiple.

Item 32. The base station of item 28 wherein the K data signals are received over a plurality of antennas and sampled at a multiple of a chip rate of the K data signals and each received vector version corresponds to a different antenna and chip rate multiple combination.

Item 33. The base station of item 28 further comprising means for partitioning the diagonal matrices into a plurality of partitions.

Item 34. The base station of item 28 wherein the estimating data of the K data signals includes performing LU decomposition , forward substitution and backward substitution.

Item 35. The base station of item 28 wherein the estimating data of the K data signals includes performing Cholesky decomposition, forward substitution and backward substitution.

Item 36. The base station of item 28 wherein LU decomposition is performed on the diagonal of the covariance matrix.

Item 37. The base station of item 28 wherein Cholesky decomposition is performed on the diagonal of the covariance matrix.

Item 38. A base station for detecting data from K data signals transmitted over a shared spectrum in a code division multiple access format, the base station comprising:

an antenna and a sampling device for receiving a combined signal over the shared spectrum as a plurality of received vector versions, the combined signal including the K transmitted data signals;
a plurality of compute sub-system matrix blocks for producing a plurality of system matrices using estimated impulse responses of the K data signals, each system matrix corresponding to a received vector version;
a compute covariance matrix block for producing a covariance matrix associated with the system matrices;
a plurality of extension blocks for extending the system and covariance matrices;
a plurality of first block column devices for approximating the extended system and covariance matrices as block circulant matrices;
a plurality of block Fourier transform devices for determining a diagonal matrix of each of the extended and approximated system and covariance matrices, using the block column of the extended and approximated system and covariance matrices;
an extension device for extending each received vector version;
a block Fourier transform device for taking a Fourier transform of each received vector version;
a plurality of multipliers for taking products of the diagonal matrices and the extended received vector versions;
a summer for summing the products; and
a block inverse Fourier transform device for estimating data of the K data signals using an inverse Fourier transform and the summed products.

Item 39a. The base station of item 38 wherein the Fourier transforms are performed using a prime factor algorithm fast Fourier transform.

Item 39b. The base station of item 38 wherein each received vector version corresponds to a different reception antenna.

Item 40. The base station of item 38 wherein the combined signal is sampled at a multiple of a chip rate of the K data signals and each received vector version corresponds to a different chip rate multiple.

Item 41. The base station of item 38 wherein the K data signals are received over a plurality of antennas and sampled at a multiple of a chip rate of the K data signals and each received vector version corresponds to a different antenna and chip rate multiple combination.

Item 42. The base station of item 38 further comprising partitioning device for partitioning the diagonal matrices into a plurality of partitions.

Item 43. The base station of item 38 further comprising a LU decomposition device for performing LU decomposition on the diagonal of the covariance matrix and a forward substitution and a backward substitution devices for producing an inverse Fourier transform of the estimated data vector.

Item 44. The base station of item 38 further comprising a Cholesky decomposition device for performing Cholesky decomposition on the diagonal of the covariance matrix and a forward substitution and a backward substitution devices for producing an inverse Fourier transform of the estimated data vector.

Item 45. A method for receiving a plurality of data signals transmitted over a shared spectrum in a code division multiple access communication system, the method comprising:

receiving and sampling a combined signal having the plurality of transmitted data signals to produce a received vector;
determining a channel response for the plurality of transmitted data signals;
determining a system response matrix using the determined channel response and codes of the transmitted data signals;
determining a covariance matrix using the system response matrix;
extending the received vector, the system response matrix and the determined covariance matrix;
taking a block discrete Fourier transform of a block column of the extended covariance matrix
taking a block discrete Fourier transform of a block column of the system response matrix;
taking a block discrete Fourier transform of the received vector; and
determining an extended data vector using the block discrete Fourier transforms.

Item 46. The method of item 45 further comprising partitioning the block discrete Fourier transforms.

Item 47. The method of item 45 further comprising performing LU decomposition on the block Fourier transforms.

48. A user equipment for detecting data from K data signals transmitted over a shared spectrum in a code division multiple access format, the user equipment comprising:

an antenna and a sampling device for receiving and sampling a combined signal having the plurality of transmitted data signals to produce a received vector;
a channel estimation device for determining a channel response for the plurality of transmitted data signals;
a compute block matrix device for determining a system response matrix using the determined channel response and codes of the transmitted data signals;
a compute covariance matrix device for determining a covariance matrix using the system response matrix;
a plurality of extend devices for extending the received vector, the system response matrix and the determined covariance matrix;
a block discrete Fourier transform device for taking a block discrete Fourier transform of a block column of the extended covariance matrix
a block discrete Fourier transform device for taking a block discrete Fourier transform of a block column of the system response matrix;
a block discrete Fourier transform device for taking a block discrete Fourier transform of the received vector; and
a circuit for determining an extended data vector using the block discrete Fourier transforms.

Item 49. The user equipment of item 48 further comprising a partitioning device for partitioning the block discrete

**EP 2 093 895 A1**

Fourier transforms.

Item 50. The user equipment of item 48 wherein the circuit comprising a LU decomposition device for performing LU decomposition on the block Fourier transforms.

Item 51. A user equipment for detecting data from $K$ data signals transmitted over a shared spectrum in a code division multiple access format, the user equipment comprising:

means for receiving and sampling a combined signal having the plurality of transmitted data signals to produce a received vector;
means for determining a channel response for the plurality of transmitted data signals;
means for determining a system response matrix using the determined channel response and codes of the transmitted data signals;
means for determining a covariance matrix using the system response matrix;
means for extending the received vector, the system response matrix and the determined covariance matrix;
means for taking a block discrete Fourier transform of a block column of the extended covariance matrix
means for taking a block discrete Fourier transform of a block column of the system response matrix;
means for taking a block discrete Fourier transform of the received vector; and
means for determining an extended data vector using the block discrete Fourier transforms.

Item 52. The user equipment of item 51 further comprising means for partitioning the block discrete Fourier transforms.

Item 53. The user equipment of item 51 wherein the means for determining an extended data vector comprising a LU decomposition device for performing LU decomposition on the block Fourier transforms.

Item 54. A base station for detecting data from $K$ data signals transmitted over a shared spectrum in a code division multiple access format, the base station comprising:

an antenna and a sampling device for receiving and sampling a combined signal having the plurality of transmitted data signals to produce a received vector;
a channel estimation device for determining a channel response for the plurality of transmitted data signals;
a compute block matrix device for determining a system response matrix using the determined channel response and codes of the transmitted data signals;
a compute covariance matrix device for determining a covariance matrix using the system response matrix;
a plurality of extend devices for extending the received vector, the system response matrix and the determined covariance matrix;
a block discrete Fourier transform device for taking a block discrete Fourier transform of a block column of the extended covariance matrix
a block discrete Fourier transform device for taking a block discrete Fourier transform of a block column of the system response matrix;
a block discrete Fourier transform device for taking a block discrete Fourier transform of the received vector; and
a circuit for determining an extended data vector using the block discrete Fourier transforms.

Item 55. The base station of item 54 further comprising a partitioning device for partitioning the block discrete Fourier transforms.

Item 56. The base station of item 54 wherein the circuit comprising a LU decomposition device for performing LU decomposition on the block Fourier transforms.

Item 57. A base station for detecting data from $K$ data signals transmitted over a shared spectrum in a code division multiple access format, the base station comprising:

means for receiving and sampling a combined signal having the plurality of transmitted data signals to produce a received vector;
means for determining a channel response for the plurality of transmitted data signals;
means for determining a system response matrix using the determined channel response and codes of the transmitted data signals;
means for determining a covariance matrix using the system response matrix;

means for extending the received vector, the system response matrix and the determined covariance matrix;
means for taking a block discrete Fourier transform of a block column of the extended covariance matrix
means for taking a block discrete Fourier transform of a block column of the system response matrix;
means for taking a block discrete Fourier transform of the received vector; and
means for determining an extended data vector using the block discrete Fourier transforms.

Item 58. The base station of item 57 further comprising means for partitioning the block discrete Fourier transforms.

Item 59. The base station of item 57 wherein the means for determining an extended data vector comprising a LU decomposition device for performing LU decomposition on the block Fourier transforms.

**Claims**

1. A communication station (28) configured to estimate a communication data vector $\underline{d}$ from a received signal vector $\underline{r}$ comprising a circuit configured to solve a linear equation of the form $\underline{r} = A \underline{d} + \underline{n}$ for $\underline{d}$ using either a minimum mean square error block linear equalizer, MMSE-BLE, or zero forcing block linear equalizer, ZF-BLE based solution, where $A$ is a block Toeplitz matrix and $\underline{n}$ represents a noise vector, $\underline{r}$ and $\underline{d}$ are vectors, the communication station **characterized in that** the circuit comprises:

    a covariance matrix processing component (43, 104, 140, 204, 240) configured to produce a covariance matrix $R$ of the form $A^H A + \sigma^2 I$ for a MMSE-BLE based solution, where $A^H$ is a Hermetian of $A$, $\sigma^2$ is a noise variance and I is an identity matrix or $A^H A$ for a ZF-BLE based solution;
    a first matrix extension component (132, 231, 134, 234) configured to extend the $A$ matrix and $R$ matrix;
    a matrix block processing component (118, 218, 110, 210 112, 212) configured to approximate the extended $A$ and $R$ matrices as block circulant matrices;
    a diagonal matrix processing component (226, 130, 230) configured to determine a diagonal matrix of each of the extended and approximated $A$ and $R$ matrices, using the block columns of the extended and approximated $A$ and $R$ matrices;
    a second matrix extension component (131, 231) configured to extend $\underline{r};$
    a block Fourier transform component (100, 200) configured to take a Fourier transform of $\underline{r}$;
    a multiplier component (128, 228, 229) configured to take products of the diagonal matrices and the extended $\underline{r}$;
    a summer configured to sum the products (225); and
    a block inverse Fourier transform component (120, 220) configured to estimate $\underline{d}$ using an inverse Fourier transform and the summed products.

2. The communication station of claim 1 wherein the first matrix extension component(132, 134) and the second matrix extension component (131) are configured to respectively extend the $A$ and $R$ matrices and $\underline{r}$ to be compatible with a prime factor algorithm fast Fourier transform.

3. The communication station of claim 1 further comprising a LU decomposition component (126) configured to perform LU decomposition on the diagonal of the $R$ matrix and a forward substitution component (124) and a backward substitution component (122) configured to produce an inverse Fourier transform of $\underline{d}$.

4. The communication station of claim 1 further comprising a Cholesky decomposition component (226) for performing Cholesky decomposition on the diagonal of the $R$ matrix and a forward substitution component (224) and a backward substitution component (222) for producing an inverse Fourier transform of $\underline{d}$.

5. The communication station of any of claims claim 1-4 configured as a user equipment or a base station.

6. A method of estimating a transmitted data vector $\underline{d}$ from a received vector $\underline{r}$ comprising:

    receiving vector $\underline{r}$, where $\underline{r}$ has a form $\underline{r} = A \underline{d} + \underline{n}$ and where $A$ is a block Toeplitz matrix and $\underline{n}$ is a noise vector;
    producing a covariance matrix $R$ of the form $A^H A + \sigma^2 I$ for a minimum mean square error block linear equalizer (MMSE-BLE) based solution, where $A^H$ is a Hermetian of $A$, $\sigma^2$ is a noise variance and $I$ is an identity matrix or $A^H A$ for a zero forcing block linear equalizer (ZF-BLE) based solution;
    extending the $A$ matrix and $R$ matrix;
    approximating the extended $A$ and $R$ matrices as block circulant matrices;

determining a diagonal matrix of each of the extended and approximated **A** and **R** matrices, using the block column of the extended and approximated **A** and **R** matrices;

extending **r**;

taking a Fourier transform of **r**;

taking products of the diagonal matrices and the extended **r**;

summing the products; and

estimating **d** using an inverse Fourier transform and the summed products.

7.  The method of claim 6 wherein the **A** and **R** matrices and **r** are extended to be compatible with a prime factor algorithm fast Fourier transform.

8.  The method of claim 6 or 7 further comprising performing LU decomposition on the diagonal of the **R** matrix and a forward substitution and a backward substitution devices for producing an inverse Fourier transform of **d.**

9.  The method of claim 6, 7 or 8 further comprising performing Cholesky decomposition on the diagonal of the **R** matrix and a forward substitution and a backward substitution devices for producing an inverse Fourier transform of **d.**

**FIG. 1**

COMMUNICATION BURST 16

| DATA FIELD 1 | MIDAMBLE | DATA FIELD 2 | GUARD PERIOD |
|---|---|---|---|

ONE TIME SLOT

**FIG. 3**

FIG. 2

48 — DETERMINE THE SYSTEM MATRIX, A, USING THE ESTIMATED CHANNEL IMPULSE RESPONSE, $\underline{h}^{(k)}$, AND THE SPREADING CODE, $\underline{c}^{(k)}$, FOR EACH BURST

49 — FORM THE COVARIANCE MATRIX R:
$R = A^H A$      FOR ZF - BLE
$R = A^H A + \sigma^2 I$      FOR MMSE - BLE

50 — TO INCLUDE ALL OF THE RECEIVED CHIP SYMBOLS IN THE OBSERVATION INTERVAL, THE SYSTEM MATRIX A AND ITS COVARIANCE MATRIX R ARE EXTENDED TO BLOCK SQUARE MATRICES: THE EXTENDED A OF SIZE $D \cdot Q x D \cdot K$ AND THE EXTENDED R OF SIZE $D \cdot K x D \cdot K$. USING THEIR BANDED BLOCK - TOEPLIZ STRUCTURES, BOTH EXTENDED MATRICES ARE APPROXIMATED TO BLOCK CIRCULANT MATRICES $A_C$ AND $R_C$, SEPARATELY.

51 — BECAUSE OF THE EXTENSION OF A AND R, THE RECEIVED VECTOR, $\underline{r}$, IS EXTENDED TO THE VECTOR, $\underline{r}_C$, BY INSERTING ZEROS.

52 — A BLOCK - DIAGONAL MATRIX, $\Lambda$, IS DETERMINED BY TAKING A BLOCK DFT OF THE FIRST BLOCK COLUMN OF $R_C$

TO FIG. 4B

FIG. 4A

FROM FIG. 4A

53 — THE BLOCK DFT OF MATCHED FILTERING $F(A^H\underline{r})$ IS APPROXIMATED BY $F(A_c^H\underline{r}_c)$. IT IS CALCULATED BY TAKING A BLOCK DFT OF $A_c$ AND $\underline{r}_c$

55 — TO FIND $\underline{y}^{(i)}$, PERFORM FORWARD SUBSTITUTION, $$L^{(i)}\underline{y}^{(i)} = \Lambda_A^{(i)H} F(\underline{r}_c)^{(i)}$$ WHERE $\Lambda_A^{(i)}$ IS THE ITH MAIN DIAGONAL BLOCK OF $Q \times K$ IN $\Lambda_A$ AND $F(\underline{r}_c)^{(i)}$ IS THE ITH BLOCK OF SIZE $Q \times 1$ IN $F(\underline{r}_c)$. HERE, $\Lambda_A$ ARE THE BLOCK DFT OF THE FIRST BLOCK COLUMN OF $A_c$ AND $F(\underline{r}_c)$ IS THE BLOCK DFT OF THE VECTOR $\underline{r}_c$.

56 — PERFORM BACKWARD SUBSTITUTION TO SLOVE FOR THE *ith* BLOCK $F(\underline{d})^{(i)}$ OF SIZE $K \times 1$ OF $F(\underline{d})$, $$U^{(i)}F(\underline{d})^{(i)} = \underline{y}^{(i)}$$

57 — THE ESTIMATED DATA VECTOR, $\underline{d}$, IS DETERMINED BY TAKING A BLOCK INVERSE DFT OF $F(\underline{d})$.

# FIG. 4B

COMMUNICATION  16
BURST

← ONE TIME SLOT →

| DATA FIELD 1 | MIDAMBLE | DATA FIELD 2 | GUARD PERIOD |
|---|---|---|---|
| 22 | 20 | 24 | 18 |

PROCESSING LENGTH TO
INCLUDE LAST SYMBOLS
IMPULSE RESPONSE     W-1

PROCESSING LENGTH TO
INCLUDE LAST SYMBOLS
IMPULSE RESPONSE     W-1

PROCESSING LENGTH TO
HAVE A DESIRED PFA
LENGTH

PROCESSING LENGTH TO
HAVE A DESIRED PFA
LENGTH

FIG. 5

EP 2 093 895 A1

FIG. 6

FIG. 7

FIG. 8

FIG. 9

FIG. 10

EP 2 093 895 A1

Europäisches
Patentamt

European
Patent Office

Office européen
des brevets

# EUROPEAN SEARCH REPORT

Application Number

EP 09 16 1683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | WO 02/089346 A (INTERDIGITAL TECHNOLOGY CORPORATION) 7 November 2002 (2002-11-07) * page 18, paragraph 53 - paragraph 54 * * paragraph [0063] - paragraph [0064] * ----- | 1-9 | INV. H04B1/707 |
| A | VOLLMER M ET AL: "COMPARATIVE STUDY OF JOINT-DETECTION TECHNIQUES FOR TD-CDMA BASED MOBILE RADIO SYSTEMS" IEEE JOURNAL ON SELECTED AREAS IN COMMUNICATIONS, IEEE SERVICE CENTER, PISCATAWAY, NJ, US, vol. 19, no. 8, August 2001 (2001-08), pages 1461-1475, XP001115203 ISSN: 0733-8716 * paragraph [00VI] * ----- | 1-9 | |
| A | PAN J-L ET AL: "LOW COMPLEXITY DATA DETECTION USING FAST FOURIER TRANSFORM DECOMPOSITION OF CHANNEL CORRELATION MARIX" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 2 OF 6, 25 November 2001 (2001-11-25), pages 1322-1326, XP001099319 ISBN: 0-7803-7206-9 * page 1324, left-hand column, last paragraph * * page 1325, left-hand column * ----- | 1-9 | TECHNICAL FIELDS SEARCHED (IPC)  H04B |

The present search report has been drawn up for all claims

| Place of search | Date of completion of the search | Examiner |
|---|---|---|
| Munich | 15 July 2009 | Giglietto, Massimo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**          EP 09 16 1683

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2009

| Patent document cited in search report | Publication date | Patent family member(s) | Publication date |
|---|---|---|---|
| WO 02089346 A | 07-11-2002 | AT 346427 T | 15-12-2006 |
| | | BR 0209411 A | 06-07-2004 |
| | | CA 2445956 A1 | 07-11-2002 |
| | | CN 1505871 A | 16-06-2004 |
| | | DE 60216274 T2 | 28-06-2007 |
| | | EP 1391048 A1 | 25-02-2004 |
| | | ES 2275002 T3 | 01-06-2007 |
| | | JP 4034189 B2 | 16-01-2008 |
| | | JP 2005508103 T | 24-03-2005 |
| | | JP 2007060686 A | 08-03-2007 |
| | | KR 20050090016 A | 09-09-2005 |
| | | KR 20070061924 A | 14-06-2007 |
| | | KR 20070110946 A | 20-11-2007 |
| | | MX PA03009956 A | 29-01-2004 |
| | | NO 20034813 A | 29-12-2003 |
| | | TW 261990 B | 11-09-2006 |
| | | TW 270263 B | 01-01-2007 |
| | | US 2003021335 A1 | 30-01-2003 |
| | | US 2003026236 A1 | 06-02-2003 |
| | | US 2003026325 A1 | 06-02-2003 |
| | | US 2009060007 A1 | 05-03-2009 |

EPO FORM P0459